# FASCICULE DE BREVET EUROPEEN

(11) **EP 0 890 226 B1**
(45) Date de publication et mention de la délivrance du brevet: **31.05.2000**
(21) Numéro de dépôt: 97916493.6
(22) Date de dépôt: 25.03.1997
(51) Int. Cl.: H04B 7/10, H01Q 21/24, H04B 7/08

(54) **STATION RADIO A ANTENNES A POLARISATION CIRCULAIRE**
BASISFUNKSTATION MIT ZIRKULARPOLARISIERTEN ANTENNEN
RADIO STATION WITH CIRCULARLY POLARISED ANTENNAS

(30) Priorité: 28.03.1996 FR 9603880
(43) Date de publication de la demande: 13.01.1999
(73) Titulaire: Nortel Matra Cellular, 78280 Guyancourt Cédex (FR)
(72) Inventeur: LUCIDARME, Thierry, F-78180 Montigny-le-Bretonneux (FR)
(74) Mandataire: Loisel, Bertrand
(86) Numéro de dépôt international: FR9700524
(87) Numéro de publication internationale: WO9737440

(56) Documents cités:
- EP-A- 0 656 697
- US-A- 5 172 128
- US-A- 5 280 631

## Description

La présente invention concerne une station radio, utilisable notamment comme station de base dans des systèmes de radiotéléphonie cellulaire.

Traditionnellement, les systèmes de radiocommunication avec des mobiles utilisent des stations de base pourvues d'antennes à polarisation linéaire verticale. Lorsqu'on souhaite coupler plus d'une source de signal radio sur une antenne, on utilise des dispositifs de type coupleur hybride ayant une seule sortie connectée à l'antenne. Dans ce cas, l'autre sortie du coupleur hybride doit être reliée à une résistance de charge afin d'adapter l'impédance. Cette résistance de charge dissipe la moitié de la puissance radio qui ne se trouve pas rayonnée utilement et provoque un échauffement indésirable.

Un inconvénient de l'utilisation de polarisations linéaires dans les radiocommunications avec les mobiles est que la qualité de la communication dépend de l'orientation de l'antenne du mobile. Par exemple, des mesures ont montré qu'une antenne de véhicule de type coaxiale inclinée à 45° peut provoquer une perte de signal de 80% pour une émission en polarisation linéaire verticale.

Par ailleurs, on sait que des traitements en diversité permettent d'améliorer les performances des systèmes de radiocommunication. Les stations de base des systèmes cellulaires utilisent habituellement une diversité de type spatiale en réception, au moyen de deux antennes à polarisation verticale spatialement séparées. Il a également été proposé d'exploiter une diversité de polarisation plutôt qu'une diversité spatiale. On utilise alors deux antennes placées au même endroit, l'une sensible à la polarisation verticale et l'autre sensible à la polarisation horizontale.

Un but de la présente invention est d'améliorer les possibilités offertes pour l'émission par une station de base de radiocommunication.

L'invention propose ainsi une station radio, comprenant deux antennes respectivement associées à des premier et second coupleurs hybrides de polarisation en émission, chaque antenne étant agencée pour générer deux composantes de champ électrique orthogonales en réponse à deux signaux radio respectifs en quadrature délivrés par son coupleur de polarisation associé. La station comprend en outre au moins un coupleur hybride de distribution ayant une première sortie reliée à une première entrée du premier coupleur de polarisation et une seconde sortie reliée à une première entrée du second coupleur de polarisation, et au moins une source de signal radio délivrant un signal radio à une première entrée du coupleur de distribution.

Ainsi, chaque antenne émet une portion du signal radio délivré par la source en polarisation circulaire. En conséquence, la qualité de la réception par le mobile ne dépend plus de l'orientation de son antenne par rapport à une direction de polarisation linéaire.

Dans une première version de l'invention, les coupleurs hybrides sont reliés entre eux et aux antennes de façon que le signal radio délivré par la source soit émis par les deux antennes sous forme de deux ondes radio respectives à polarisation circulaire de même sens. Un positionnement relatif approprié des deux antennes, et un choix approprié des longueurs des câbles coaxiaux reliant les coupleurs entre eux permet alors d'obtenir un gain en directivité à l'émission (jusqu'à 3dB environ). Un tel gain en directivité rend la station de base bien adaptée au cas microcellulaire, surtout lorsqu'on souhaite une pénétration radio à l'intérieur de bâtiments.

Dans une autre version de l'invention, les coupleurs hybrides sont reliés entre eux et aux antennes de façon que le signal radio délivré par la source soit émis par les deux antennes sous forme de deux ondes radio respectives à polarisation circulaire de sens opposés. Ceci procure une diversité de polarisation en émission permettant de combattre les effets du fading. Cette version convient bien dans les cas où le milieu de propagation crée relativement peu de diversité, c'est-à-dire lorsque les ondes émises subissent relativement peu de réflexions (propagation en milieu rural, désert, mer ...). Le gain de diversité ainsi obtenu peut aller de 3 à 10 dB.

On observe qu'on peut très facilement passer de l'une à l'autre des deux versions évoquées ci-dessus, en modifiant simplement les branchements des câbles coaxiaux raccordés aux coupleurs.

Le même type d'équipement peut ainsi être utilisé pour répondre à différents besoins de l'opérateur du réseau.

Les avantages exposés ci-dessus peuvent être obtenus aisément pour plusieurs sources de signaux radio. Les deux étages de couplage ont l'avantage, lorsque plusieurs sources radio sont raccordées, de permettre de rayonner utilement toute la puissance disponible (hors pertes dans les duplexeurs), ce qui évite de dissiper de la chaleur inutile dans la baie.

L'utilisation des deux antennes selon l'invention permet en outre des dispositions avantageuses dans la partie réception de la station radio. Ces dispositions se combinent avantageusement à celles qu'on vient de mentionner pour la partie émission, mais elles seraient applicables indépendamment. Selon l'une de ces dispositions, la station radio comprend au moins un récepteur assurant un traitement en diversité de deux signaux radio d'entrée, l'un desdits signaux radio d'entrée étant obtenu à partir d'une composante de champ électrique captée par l'une des deux antennes selon une première direction, et l'autre signal radio d'entrée étant obtenu à partir d'une composante de champ électrique captée par l'autre antenne selon une seconde direction orthogonale à ladite première direction.

Le récepteur cumule alors les avantages d'une diversité spatiale et d'une diversité de polarisation pour combattre le fading. Il est possible de monter plusieurs récepteurs de cette façon.

D'autres particularités et avantages de la présente invention apparaîtront dans la description ci-après d'exemples de réalisation non limitatifs, en référence aux dessins annexés, sur lesquels :
- la figure 1 est un schéma d'une station radio selon l'invention ayant une unité d'émission/réception ;
- la figure 2 est une vue schématique d'un coupleur hybride utilisable dans une station selon l'invention ;
- la figure 3 est un schéma d'une variante de réalisation de la station de la figure 1 ;
- les figures 4 à 6 sont des schémas de stations radio selon l'invention ayant deux unités d'émission/réception; et
- les figures 7 et 8 sont des schémas de stations radio selon l'invention ayant quatre unités d'émission/réception.

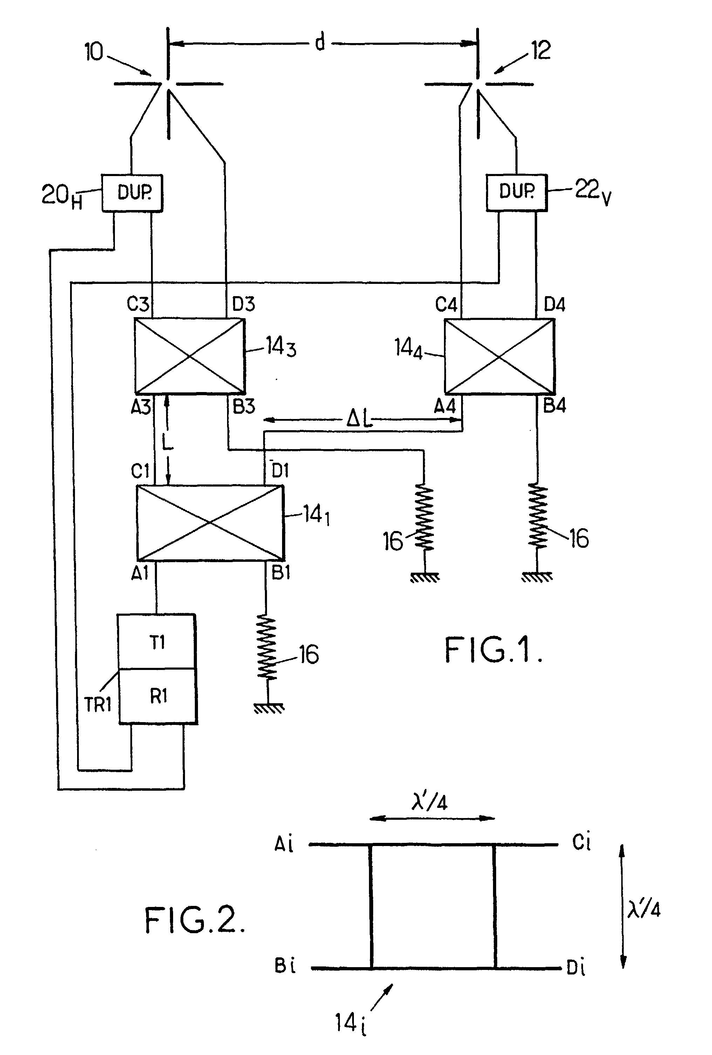

Les stations radio représentées sur les figures 1 et 3 à 8 comprennent deux antennes 10, 12 constituées chacune par deux dipôles croisés colocalisés. Pour chaque antenne, les deux dipôles sont orthogonaux, l'un étant destiné à être placé verticalement, et l'autre horizontalement.

Chaque antenne 10, 12 est associée à un coupleur hybride de polarisation en émission respectif 14₃, 14₄. Chacun de ces coupleurs 14₃, 14₄ a deux sorties, l'une C3, C4 attaquant le dipôle horizontal de son antenne associée 10, 12, et l'autre D3, D4 attaquant le dipôle vertical de son antenne associée 10, 12.

Chaque coupleur de polarisation 14₃, 14₄ est choisi de façon à ce qu'il produise deux signaux radio en quadrature sur ses deux sorties C3 et D3, C4 et D4 . Ils peuvent notamment être des coupleurs hybrides de type 0°/90° tels que celui schématisé sur la figure 2. Un tel coupleur comprend un substrat diélectrique, pourvu d'un plan de masse en cuivre, sur lequel est déposé un motif conducteur en cuivre tel que celui représenté sur la figure 2. Ce motif se compose de deux segments parallèles Ai-Ci, Bi-Di espacés de λ'/4, λ' désignant la longueur d'onde des signaux radio tenant compte de la permittivité relative du substrat, et de deux autres segments, également parallèles entre eux et espacés de λ'/4, s'étendant perpendiculairement entre les segments Ai-Ci et Bi-Di. Les extrémités adjacentes Ai, Bi des deux premiers segments constituent les deux entrées du coupleur, tandis que les deux extrémités opposées de ces segments Ci, Di constituent les deux sorties du coupleur 14ᵢ (i=3,4). Avec un tel coupleur, dit coupleur "branchline", pourvu que les impédances des quatre accès soient adaptées (à 50 Ω typiquement), le signal radio parvenant sur l'entrée Ai est divisé en deux portions de puissance moitié, l'une en phase délivrée par la sortie Ci, et l'autre déphasée de -90° délivrée par la sortie Di et, symétriquement, le signal radio parvenant sur l'entrée Bi est divisé en deux portions de puissance moitié, l'une en phase délivrée par la sortie Di, et l'autre déphasée de -90° délivrée par l'autre sortie Ci.

Les composantes délivrées par les sorties Ci et Di du coupleur 14ᵢ sont ainsi toujours en quadrature l'une par rapport à l'autre, de sorte que lorsqu'elles attaquent les deux dipôles orthogonaux de l'antenne associée, les deux composantes de champ électrique orthogonales générées par ces dipôles conduisent à l'émission d'une onde radio à polarisation circulaire. Le sens de polarisation circulaire est différent pour le signal radio parvenant sur l'entrée Ai du coupleur et pour le signal radio parvenant sur l'entrée Bi du coupleur. On considérera par exemple que le signal radio parvenant sur l'entrée Ai est émis en polarisation circulaire gauche (PCG), et que le signal radio parvenant sur l'entrée Bi du coupleur est émis en polarisation circulaire droite (PCD).

Dans l'exemple de réalisation représenté sur la figure 1, les entrées A3 et A4 des coupleurs de polarisation 14₃, 14₄ sont reliées par des câbles coaxiaux respectifs à deux sorties C1, D1 d'un coupleur hybride de distribution 14₁. Ce coupleur de distribution 14₁ est par exemple conforme à l'hybride décrit en référence à la figure 2 (i=1). Son entrée A1 est reliée à une source ou émetteur de signal radio T1 faisant partie d'une unité d'émission/réception TR1. L'autre entrée B1 du coupleur de distribution 14₁ est reliée à la masse par l'intermédiaire d'une résistance d'adaptation d'impédance 16. Il en est de même des entrées B3, B4 des coupleurs de polarisation 14₃, 14₄.

Avec Le montage de la figure 1, le signal radio délivré par la source T1 est émis en PCG par les deux antennes 10, 12.

Le fait que les deux antennes 10, 12 émettent le même signal radio selon la même polarisation peut être exploité pour procurer un gain en directivité pour ce signal. Ceci est obtenu par un choix approprié de la distance d séparant les deux antennes 10, 12 et des longueurs L, L+ΔL des câbles coaxiaux reliant les sorties C1, D1 du coupleur de distribution 14₁ aux entrées A3, A4 des coupleurs de polarisation 14₃, 14₄.

On sait que, lorsque deux signaux radio identiques parviennent avec un certain déphasage à deux antennes les émettant selon un mode de polarisation identique, la directivité du système d'émission varie avec la distance d séparant les deux antennes. On peut notamment choisir une distance d conduisant à un fort gain en directivité, de l'ordre de 3 dB par exemple. Dans le cas d'un déphasage nul, on obtient un gain en directivité maximal (2,95 dB) avec le choix d=0,92.λ, λ désignant la longueur d'onde dans l'air des ondes radio. Cette condition de déphasage nul est remplie lorsque ΔL=(n-Δφ/2n)λ". Dans l'expression ci-dessus, ΔL désigne la différence de longueur entre le câble coaxial reliant la sortie D1 du coupleur 14₁ à l'entrée A4 du coupleur 14₄ et le câble coaxial reliant la sortie C1 du coupleur 14₁ à l'entrée A3 du coupleur 14₃, n désigne un entier quelconque, λ" désigne la longueur d'onde des signaux radio dans les câbles coaxiaux, et Δφ désigne la différence de phase entre la portion du signal radio présente à la sortie D1 du coupleur de distribution et la portion de ce même signal radio présente à la sortie C1 du coupleur de distribution (Δφ=-π/2 dans le cas où le coupleur de distribution 14₁ est du type représenté sur la figure 2).

Le gain en directivité rend la station radio bien adaptée pour des applications dans des stations de base sectorisées ou dans des stations de base de réseau microcellulaire, notamment lorsqu'on souhaite réaliser une pénétration des ondes radio dans des bâtiments.

Le récepteur R1 de l'unité d'émission et de réception TR1 est prévu pour assurer un traitement en diversité de deux signaux radio d'entrée, comme il est usuel dans le domaine de la radiotéléphonie cellulaire. La présence des deux antennes 10, 12 dans la station radio permet de combiner les avantages d'une diversité spatiale et d'une diversité de polarisation dans les deux signaux d'entrée du récepteur R1. L'un de ces signaux d'entrée est la composante horizontale du champ électrique captée par le dipôle horizontal de l'antenne 10, tandis que l'autre signal radio d'entrée est la composante verticale du champ électrique en un autre emplacement captée par le dipôle vertical de l'autre antenne 12. Deux duplexeurs 20_{H}, 22_{V} sont associés respectivement au dipôle horizontal de l'antenne 10 et au dipôle vertical de l'antenne 12 afin de séparer les trajets d'émission et de réception.

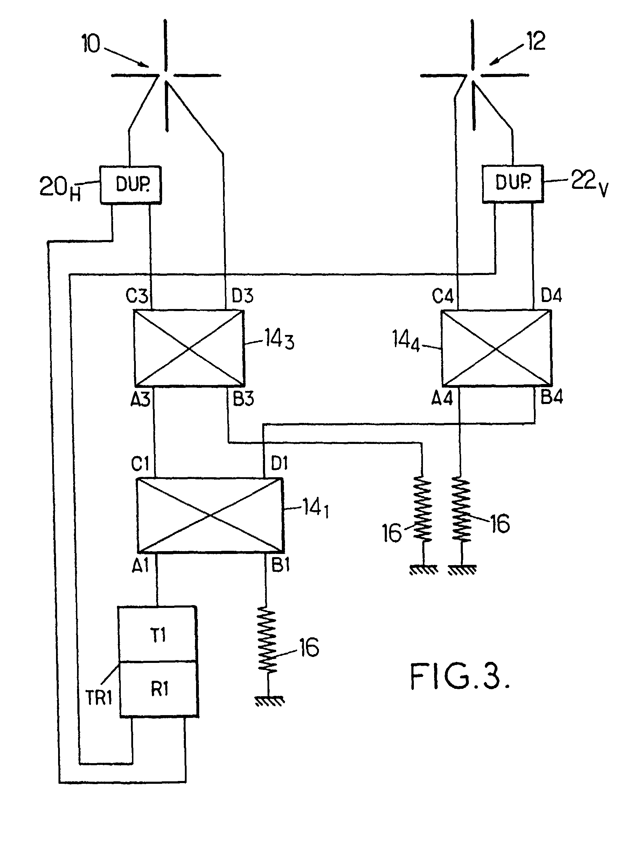

Le mode de réalisation représenté sur la figure 3 diffère de celui représenté sur la figure 1 en ce que la sortie D1 du coupleur de distribution 14₁ est reliée à l'entrée B4 et non à l'entrée A4 du coupleur de polarisation 14₄, l'entrée A4 étant alors reliée à une résistance d'adaptation d'impédance 16. Dans ce cas, le signal radio issu de la source T1 est émis en PCG par l'antenne 10 et en PCD par l'antenne 12. La station de base procure alors une diversité spatiale et de polarisation à l'émission, de sorte qu'elle est bien adaptée à des milieux de propagation produisant peu de réflexions (milieu rural, désert, mer...).

On remarque que l'installateur de la station peut choisir l'option d'un gain en directivité ou celle d'un gain en diversité simplement en branchant différemment le câble coaxial relié à la sortie D1 du coupleur de distribution 14₁. Le même équipement montre ainsi une grande richesse de possibilités obtenue avec des manipulations élémentaires.

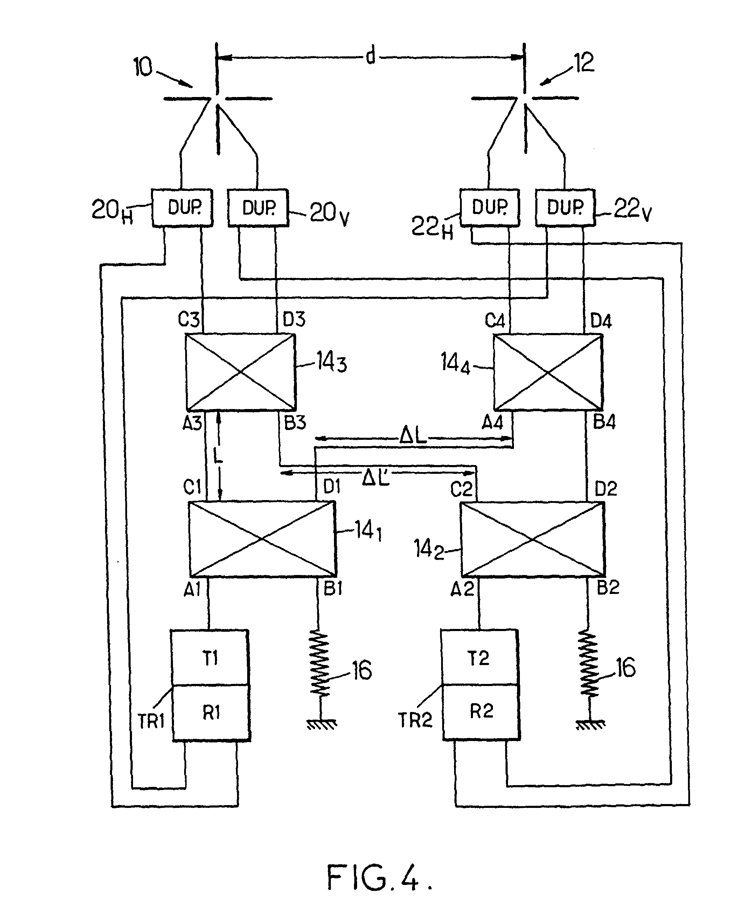

Dans les modes de réalisation représentés sur les figures 4 à 6, la station radio comporte une seconde unité d'émission/réception TR2, TR3, avec une source de signal radio T2, T3 et un récepteur à diversité R2, R3. Les avantages exposés précédemment peuvent être obtenus pleinement pour les deux unités d'émission/réception TR1, TR2.

Dans l'exemple représenté sur la figure 4, il est prévu un second coupleur de distribution 14₂, par exemple du type décrit en référence à la figure 2 (i=2). Le coupleur de distribution 14₂ a son entrée A2 reliée à la sortie de la source T2, son entrée B2 reliée à une résistance d'adaptation d'impédance 16, sa sortie C2 reliée à l'entrée B3 du coupleur de polarisation 14₃, et sa sortie D2 reliée à l'entrée B4 du coupleur de polarisation 14₄. Ainsi, le signal radio délivré par la source T2 est émis en PCD par les deux antennes 10, 12, tandis que le signal radio délivré par la source T1 est émis en PCG par les deux antennes 10, 12. Ceci permet d'obtenir l'avantage du gain en directivité pour les deux sources de signaux radio. Dans le cas représenté sur la figure 4, le signal radio issu de la source T2 se retrouve avec un déphasage de -90° à la sortie D2 du coupleur 14₂, et avec un déphasage nul à la sortie C2 (soit un déphasage Δφ' de +90° par rapport à la sortie D2). La distance d entre les deux antennes étant de 0,92.λ, la différence de longueur ΔL' entre le câble coaxial reliant la sortie C2 du coupleur 14₂ à l'entrée B3 du coupleur 14₃ et le câble coaxial reliant la sortie D2 du coupleur 14₂ à l'entrée B4 du coupleur 14₄ est de la forme (n'-Δφ'/2π)λ", n' désignant un entier quelconque, pour obtenir un gain en directivité de 2,95 dB.

Pour la partie réception, deux autres duplexeurs 20_{V}, 22_{H} sont associés respectivement au dipôle vertical de l'antenne 10 et au dipôle horizontal de l'antenne 12 pour séparer les trajets d'émission et de réception. Ces deux duplexeurs fournissent au récepteur R2 de l'unité TR2 ses deux signaux radio d'entrée à diversité spatiale et de polarisation.

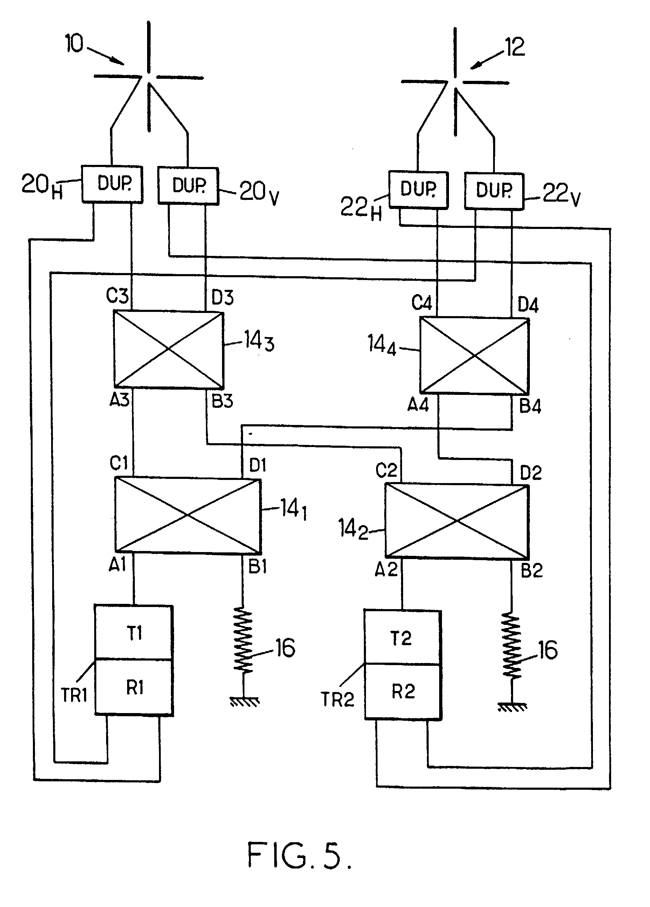

L'exemple de réalisation représenté sur la figure 5 diffère de celui de la figure 4 en ce que la sortie D1 du coupleur de distribution 14₁ est reliée à l'entrée B4 du coupleur de polarisation 14₄, tandis que la sortie B2 du coupleur de distribution 14₂ est reliée à l'entrée A4 du coupleur de polarisation 14₄. Ce mode de réalisation procure ainsi le gain en diversité pour les deux sources de signaux radio T1 (PCG sur l'antenne 10, PCD sur l'antenne 12) et T2 (PCD sur l'antenne 10, PCG sur l'antenne 12).

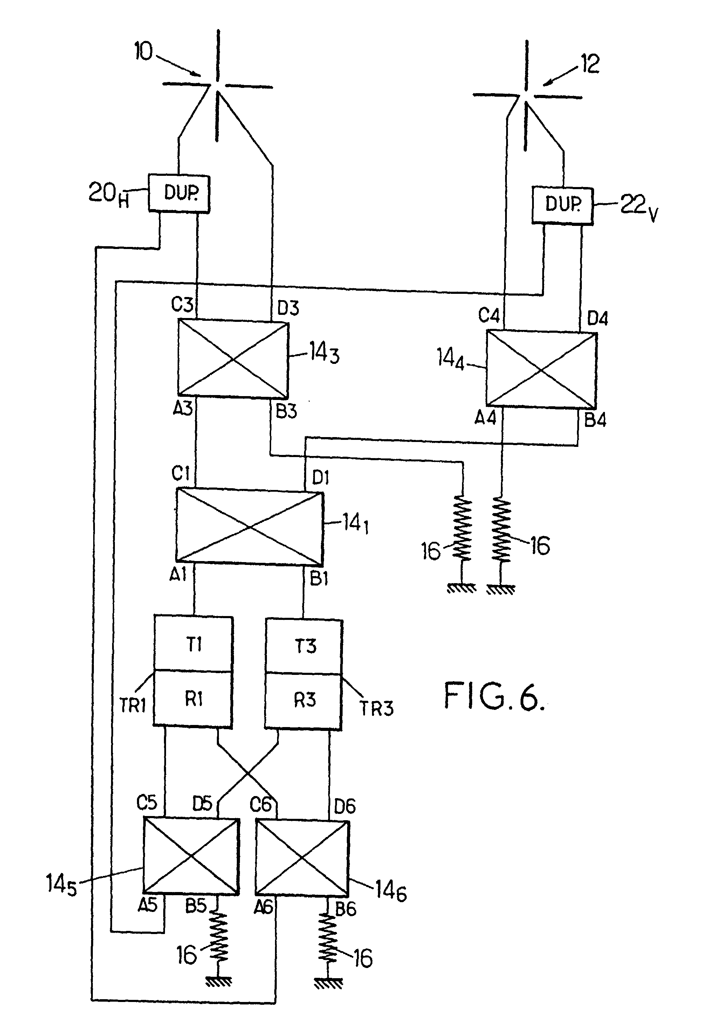

L'exemple de réalisation représenté sur la figure 6 fournit des avantages comparables à celui de la figure 5. Dans cet exemple, il n'y a pas de second coupleur de distribution 14₂, les entrées B3 et A4 des coupleurs 14₃ et 14₄ étant reliées à des résistances d'adaptation d'impédance 16. La source T3 de la seconde unité d'émission/réception TR3 est reliée à l'entrée B1 du coupleur de distribution 14₁, de sorte que le signal radio qu'elle délivre est émis en PCG par l'antenne 10 et en PCD par l'antenne 12. Deux coupleurs de division 14₅, 14₆, pouvant être du type représenté sur la figure 2 (i=5,6), sont prévus pour la partie réception. Le coupleur de division 14₅ a son entrée A5 reliée au duplexeur 22_{V}, et son entrée B5 reliée à une résistance d'adaptation d'impédance 16. Sa sortie C5 fournit le premier signal d'entrée au réception R1 et sa sortie D5 fournit le premier signal d'entrée au récepteur R3. Le coupleur de division 14₆ a son entrée A6 reliée au duplexeur 20_{H}, et son entrée B6 reliée à une résistance d'adaptation d'impédance 16. Sa sortie C6 fournit le second signal d'entrée du récepteur R1, et sa sortie D6 fournit le second signal d'entrée du réception R3. La diversité en réception est ainsi obtenue pour chacun des deux récepteurs. Par rapport à l'exemple de réalisation de la figure 5, celui de la figure 6 nécessite un coupleur hybride de plus, et deux duplexeurs de moins.

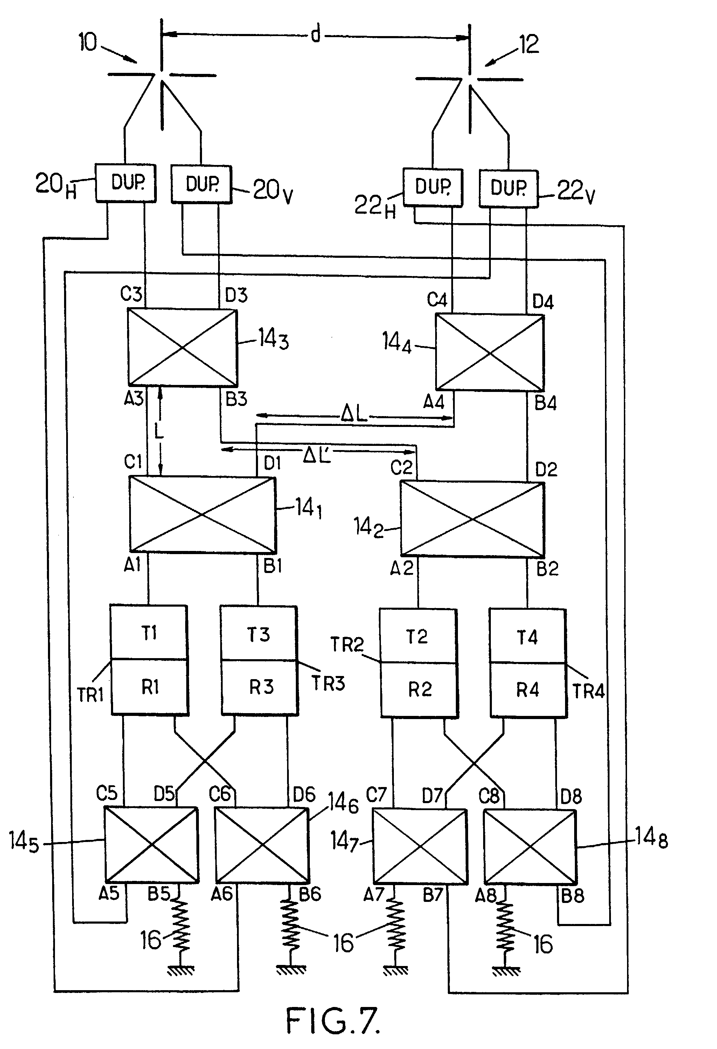

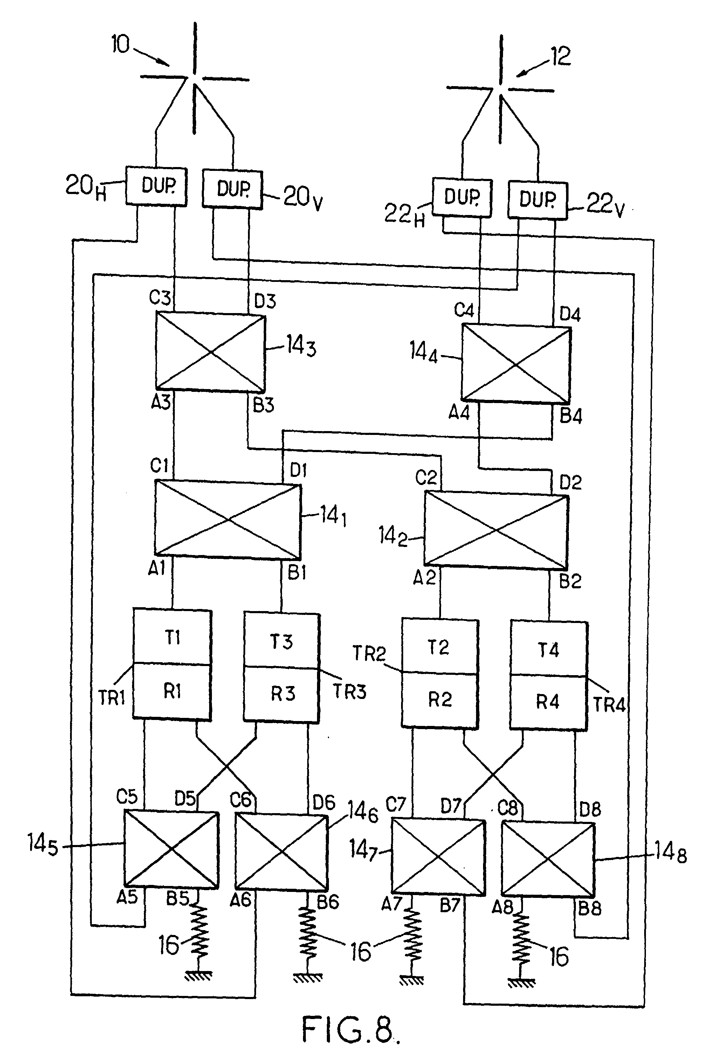

Dans les exemples de réalisation représentés sur les figures 7 et 8, la station radio comporte quatre unités d'émission/réception TR1, TR2, TR3, TR4, deux coupleurs de distribution 14₁, 14₂, et quatre coupleurs de division 14₅, 14₆, 14₇, 14₈.

Dans l'exemple de la figure 7, les coupleurs de distribution 14₁, 14₂ sont reliés aux coupleurs de polarisation 14₃, 14₄ de la même manière que dans l'exemple de la figure 4. L'entrée Bl du coupleur de distribution 14₁ est reliée à la source de signal radio T3, tandis que l'entrée B2 du coupleur de distribution 14₂ est reliée à la source de signal radio T4. Les coupleurs de division 14₅, 14₆ sont connectés de la même manière que dans l'exemple de la figure 6. Les deux autres coupleurs de division 14₇, 14₈, qui peuvent également être du type décrit en référence à la figure 2 (i=7,8), ont un montage analogue pour fournir deux signaux à chacun des récepteurs R2 et R4 à partir des composantes de champ électrique fournies par les duplexeurs 22_{H} et 20_{V} et captées respectivement par le dipôle horizontal de l'antenne 12 et par le dipôle vertical de l'antenne 10.

Les signaux produits par les sources T1 et T3 sont émis en PCG par les deux antennes, et ceux des sources T2 et T4 sont émis en PCD par les deux antennes. On peut ainsi bénéficier d'un gain en directivité pour certaines au moins des sources. Par exemple, si la distance d entre les antennes et les différences de longueur ΔL, ΔL' sont choisies de la manière précédemment indiquée, on obtiendra un gain en directivité optimal pour les sources T1 et T2. On peut également envisager des choix sous-optimaux permettant de partager entre les quatre sources les gains en directivité. On peut encore mettre à profit la possibilité d'obtenir des diagrammes de rayonnement différents pour les sources T1, T2 d'une part et T3, T4 d'autre part, pour créer un système d'antenne multi-faisceaux qui émettrait avec une certaine isolation les signaux issus de T1 et T2 dans une portion de l'espace et ceux issus de T3 et T4 dans une autre portion, autorisant ainsi une "sectorisation électronique" de la zone couverte.

L'exemple de réalisation représenté sur la figure 8 diffère de celui de la figure 7 par le branchement des câbles coaxiaux reliés aux sorties D1 et D2 des coupleurs de distribution 14₁, 14₂ : le câble coaxial relié à la sortie D1 du coupleur 14₁ est par ailleurs relié à l'entrée B4 du coupleur de polarisation 14₄, tandis que la sortie D2 de l'autre coupleur de distribution 14₂ est reliée à l'entrée A4 du coupleur de polarisation 14₄. Dans le cas de la figure 8, les quatre sources de signal radio bénéficient d'une diversité d'émission en polarisation puisque le signal délivré par chacune d'entre elles est émis en PCG par une antenne et en PCD par l'autre antenne.

On note que la station radio selon l'invention, dont on a déjà souligné la souplesse d'emploi, a encore pour avantage d'être aisément reconfigurable. Partant d'une configuration initiale telle que par exemple celle de la figure 1, l'opérateur a la possibilité de la faire évoluer selon ses besoins en y ajoutant des unités d'émission/réception, les choix de branchement par les câbles coaxiaux permettant d'obtenir un gain en directivité ou en diversité. Même dans une configuration complète à quatre unités TR1-TR4 telle que celle de la figure 7 ou 8, la puissance radio issue de chacune des quatre sources T1-T4 est entièrement rayonnée : il n'y a pas de dissipation indésirable dans des résistances d'adaptation d'impédance.

L'invention a été décrite précédemment dans le cas où les antennes 10, 12 sont constituées de deux dipôles croisés. L'homme du métier appréciera que d'autres géométries d'antenne seraient utilisables dans le cadre de la présente invention, dès lors qu'elles permettent de générer deux composantes de champ électrique orthogonales en réponse à deux signaux radio en quadrature. Une antenne utilisable pourrait ainsi être constituée par un motif conducteur carré déposé sur un substrat diélectrique, dont deux côtés adjacents seraient attaqués par les signaux radio issus du coupleur de polarisation associé.

Par ailleurs, on peut employer des coupleurs hybrides différents de celui illustré par la figure 2. En particulier, il n'est pas nécessaire que les coupleurs de distribution 14₁, 14₂ ou de division 14₅-14₈ produisent des signaux en quadrature.

## Revendications

1. Station radio, caractérisée en ce qu'elle comprend deux antennes (10,12) respectivement associées à des premier et second coupleurs hybrides de polarisation en émission (14₃, 14₄), chaque antenne étant agencée pour générer deux composantes de champ électrique orthogonales en réponse à deux signaux radio respectifs en quadrature délivrés par son coupleur de polarisation associé, et en ce qu'elle comprend en outre au moins un coupleur hybride de distribution (14₁) ayant une première sortie (C1) reliée à une première entrée (A3) du premier coupleur de polarisation (14₃) et une seconde sortie (D1) reliée à une première entrée (A4) du second coupleur de polarisation (14₄), et au moins une source de signal radio (T1) délivrant un signal (radio) à une première entrée (A1) du coupleur de distribution (14₁).

2. Station radio selon la revendication 1, caractérisée en ce que lesdits coupleurs hybrides (14₁,14₃,14₄) sont reliés entre eux et aux antennes (10,12) de façon que le signal radio délivré à ladite première entrée (A1) du coupleur de distribution (14₁) soit émis par les deux antennes sous forme de deux ondes radio respectives à polarisation circulaire de même sens.

3. Station radio selon la revendication 2, caractérisée en ce que la distance (d) entre les deux antennes (10,12) et les longueurs (L,L+ΔL) des câbles coaxiaux reliant respectivement la première sortie (C1) du coupleur de distribution (14₁) à la première entrée (A3) du premier coupleur de polarisation (14₃) et la seconde sortie (D1) du coupleur de distribution (14₁) à la première entrée (A4) du second coupleur de polarisation (14₄) sont choisies de manière à obtenir un gain en directivité pour le signal radio délivré à ladite première entrée (A1) du coupleur de distribution (14₁).

4. Station radio selon la revendication 3, caractérisée en ce que la distance (d) entre les deux antennes (10,12) est de l'ordre de 0,92.λ, λ désignant la longueur d'onde dans l'air des ondes radio, et en ce que la différence de longueur (ΔL) entre le câble coaxial reliant la seconde sortie (D1) du coupleur de distribution (14₁) à la première entrée (A4) du second coupleur de polarisation (14₄) et le câble coaxial reliant la première sortie (C1) du coupleur de distribution (14₁) à la première entrée (A3) du premier coupleur de polarisation (14₃) est de la forme (n-Δφ/2π)λ" où n est un entier, λ" est la longueur d'onde des signaux radio dans les câbles coaxiaux, et Δφ est la différence de phase entre la portion du signal radio délivré à ladite première entrée (A1) du coupleur de distribution (14₁) présente à la seconde sortie (D1) du coupleur de distribution et la portion du même signal radio présente à la première sortie (C1) du coupleur de distribution.

5. Station radio selon la revendication 1, caractérisée en ce que lesdits coupleurs hybrides (14₁, 14₃,14₄) sont reliés entre eux et aux antennes (10,12) de façon que le signal radio délivré à ladite première entrée (A1) du coupleur de distribution (14₁) soit émis par les deux antennes sous forme de deux ondes radio respectives à polarisation circulaire de sens opposés.

6. Station radio selon l'une quelconque des revendications 1 à 5, caractérisée en ce qu'elle comprend une autre source de signal radio (T3) délivrant un autre signal radio à une seconde entrée (B1) dudit coupleur de distribution (14₁).

7. Station radio selon l'une quelconque des revendications 1 à 6, caractérisée en ce qu'elle comprend des premier et second coupleurs de distribution (14₁,14₂) et des première et seconde sources de signal radio (T1,T2), le premier coupleur de distribution (14₁) ayant une première entrée (A1) recevant un premier signal radio délivré par la première source de signal radio (T1), une première sortie (C1) reliée à une première entrée (A3) du premier coupleur de polarisation (14₃) et une seconde sortie (D1) reliée à une première entrée (A4;B4) du second coupleur de polarisation (14₄), et le second coupleur de distribution (14₂) ayant une première entrée (A2) recevant un second signal radio délivré par la seconde source de signal radio (T2), une première sortie (C2) reliée à une seconde entrée (B3) du premier coupleur de polarisation (14₃) et une seconde sortie (D2) reliée à une seconde entrée (B4;A4) du second coupleur de polarisation (14₄).

8. Station radio selon la revendication 7, caractérisée en ce que lesdits coupleurs hybrides (14₁-14₄) sont reliés entre eux et aux antennes (10,12) de façon que chacun desdits premier et second signaux radio soit émis par les deux antennes sous forme de deux ondes radio respectives à polarisation circulaire de même sens.

9. Station radio selon la revendication 8, caractérisée en ce que la distance (d) entre les deux antennes (10,12) et les longueurs (L,L+ΔL) des câbles coaxiaux reliant respectivement la première sortie (C1) du premier coupleur de distribution (14₁) à la première entrée (A3) du premier coupleur de polarisation (14₃), la seconde sortie (Dl) du premier coupleur de distribution (14₁) à la première entrée (A4) du second coupleur de polarisation (14₄), la première sortie (C2) du second coupleur de distribution (14₂) à la seconde entrée (B3) du premier coupleur de polarisation (14₃), et la seconde sortie (D2) du second coupleur de distribution (14₂) à la seconde entrée (B4) du second coupleur de polarisation (14₄) sont choisies de manière à obtenir un gain en directivité pour chacun desdits premier et second signaux radio.

10. Station radio selon la revendication 9, caractérisé en ce que la distance (d) entre les deux antennes (10,12) est de l'ordre de 0,92.λ, λ désignant la longueur d'onde dans l'air des ondes radio, et en ce que la différence de longueur (ΔL) entre le câble coaxial reliant la seconde sortie (D1) du premier coupleur de distribution (14₁) à la première entrée (A4) du second coupleur de polarisation (14₄) et le câble coaxial reliant la première sortie (C1) du premier coupleur de distribution (14₁) à la première entrée (A3) du premier coupleur de polarisation (14₃) est de la forme (n-Δφ/2π)λ" où n est un entier, λ" est la longueur d'onde des signaux radio dans les câbles coaxiaux, et Δφ est la différence de phase entre la portion du premier signal radio présente à la seconde sortie (D1) du premier coupleur de distribution et la portion du premier signal radio présente à la première sortie (C1) du premier coupleur de distribution, et en ce que la différence de longueur (ΔL') entre le câble coaxial reliant la première sortie (C2) du second coupleur de distribution (14₂) à la seconde entrée (B3) du premier coupleur de polarisation (14₃) et le câble coaxial reliant la seconde sortie (D2) du second coupleur de distribution (14₂) à la seconde entrée (B4) du second coupleur de polarisation (14₄) est de la forme (n'-Δφ'/2π)λ", où n' est un entier et Δφ' est la différence de phase entre la portion du second signal radio présente à la première sortie (C2) du second coupleur de distribution et la portion du second signal radio présente à la seconde sortie (D2) du second coupleur de distribution.

11. Station radio selon la revendication 7, caractérisée en ce que lesdits coupleurs hybrides (14₁-14₄) sont reliés entre eux et aux antennes (10,12) de façon que chacun desdits premier et second signaux radio soit émis par les deux antennes sous forme de deux ondes radio respectives à polarisation circulaire de sens opposés.

12. Station radio selon l'une quelconque des revendications 7 à 11, caractérisée en ce que l'un au moins des premier et second coupleurs de distribution (14₁,14₂) a une seconde entrée (B1, B2) reliée à une autre source de signal radio (T3,T4).

13. Station radio selon l'une quelconque des revendications 1 à 12, caractérisée en ce qu'elle comprend au moins un récepteur (R1) assurant un traitement en diversité de deux signaux radio d'entrée, l'un desdits signaux radio d'entrée étant obtenu à partir d'une composante de champ électrique captée par l'une des deux antennes (10) selon une première direction, et l'autre signal radio d'entrée étant obtenu à partir d'une composante de champ électrique captée par l'autre antenne (12) selon une seconde direction orthogonale à ladite première direction.

14. Station radio selon la revendication 13, caractérisé en ce qu'il comprend au moins deux récepteurs (R1,R3) assurant chacun un traitement en diversité de deux signaux radio d'entrée respectifs, un premier coupleur de division (14₅) ayant une entrée (A5) recevant un signal radio obtenu à partir d'une composante de champ électrique captée par une antenne (12) selon la première direction et deux sorties (C5, D5) délivrant chacune une signal radio d'entrée à un récepteur respectif (R1,R3), et un second coupleur hybride de division (14₆) ayant une entrée (A6) recevant un signal radio obtenu à partir d'une composante de champ électrique captée par l'autre antenne (10) selon la seconde direction et deux sorties (C6,D6) délivrant chacune l'autre signal radio d'entrée à un récepteur respectif (R1, R3).

## Patentansprüche

1. Funkstation, dadurch gekennzeichnet, daß sie zwei Antennen (10, 12) aufweist, die einem ersten bzw. einem zweiten Hybridkoppler (14₃, 14₄) für die Polarisation bei der Abstrahlung zugeordnet sind, wobei jede Antenne dazu ausgelegt ist, zwei orthogonale elektrische Feldkomponenten als Reaktion auf zwei jeweilige, um 90° phasenverschobene Funksignale zu erzeugen, die von ihrem zugeordneten Polarisationskoppler geliefert werden, und daß sie des weiteren mindestens einen Verteilungshybridkoppler (14₁) aufweist mit einem ersten Ausgang (C1), der mit einem ersten Eingang (A3) des ersten Polarisationskopplers (14₃) verbunden ist, und einem zweiten Ausgang (D1), der mit einem ersten Eingang (A4) des zweiten Polarisationskopplers (14₄) verbunden ist, und mindestens eine Funksignalquelle (T1), welche ein (Funk-)Signal an einen ersten Eingang (A1) des Verteilungskopplers (14₁) liefert.

2. Funkstation gemäß Anspruch 1, dadurch gekennzeichnet, daß die Hybridkoppler (14₁, 14₃, 14₄) untereinander und mit den Antennen (10, 12) derart verbunden sind, daß das an den ersten Eingang (A1) des Verteilungskopplers (14₁) gelieferte Funksignal von den beiden Antennen in Form von zwei jeweiligen Funkwellen mit gleichsinniger Zirkularpolarisation abgegeben wird.

3. Funkstation gemäß Anspruch 2, dadurch gekennzeichnet, daß der Abstand (d) zwischen den beiden Antennen (10, 12) und die Längen (L,L+ΔL) der Koaxialkabel, welche den ersten Ausgang (C1) des Verteilungskopplers (14₁) mit dem ersten Eingang (A3) des ersten Polarisationskopplers (14₃) bzw. den zweiten Ausgang (D1) des Verteilungskopplers (14₁) mit dem ersten Eingang (A4) des zweiten Polarisationskopplers (14₄) verbinden, derart gewählt sind, daß ein Gewinn an Richtwirkung für das an den ersten Eingang (A1) des Verteilungskopplers (14₁) gelieferte Funksignal erhalten wird.

4. Funkstation gemäß Anspruch 3, dadurch gekennzeichnet, daß der Abstand (d) zwischen den beiden Antennen (10, 12) in der Größenordnung von 0,92·λ beträgt, wobei λ die Wellenlänge der Funkwellen in Luft bezeichnet, und daß der Längenunterschied (ΔL) zwischen dem Koaxialkabel, das den zweiten Ausgang (D1) des Verteilungskopplers (14₁) mit dem ersten Eingang (A4) des zweiten Polarisationskopplers (14₄) verbindet, und dem Koaxialkabel, das den ersten Ausgang (C1) des Verteilungskopplers (14₁) mit dem ersten Eingang (A3) des ersten Polarisationskopplers (14₃) verbindet, die Form (n-Δφ/2π)λ" besitzt, wobei n eine ganze Zahl ist, λ" die Wellenlänge der Funksignale in den Koaxialkabeln ist, und Δφ die Phasendifferenz zwischen dem am zweiten Ausgang (D1) des Verteilungskopplers vorhandenen Abschnitt des an den ersten Eingang (A1) des Verteilungskopplers (14₁) gelieferten Funksignals und dem am ersten Ausgang (C1) des Verteilungskopplers vorhanden Abschnitt desselben Funksignals ist.

5. Funkstation gemäß Anspruch 1, dadurch gekennzeichnet, daß die Hybridkoppler (14₁, 14₃, 14₄) untereinander und mit den Antennen (10, 12) derart verbunden sind, daß das an den ersten Eingang (A1) des Verteilungskopplers (14₁) gelieferte Funksignal von den beiden Antennen in Form von zwei jeweiligen Funkwellen mit gegensinniger Zirkularpolarisation abgegeben wird.

6. Funkstation gemäß einem der Ansprüche 1 bis 5, dadurch gekennzeichnet, daß sie eine weitere Funksignalquelle (T3) aufweist, welche ein weiteres Funksignal an einen zweiten Eingang (B1) des Verteilungskopplers (14₁) liefert.

7. Funkstation gemäß einem der Ansprüche 1 bis 6, dadurch gekennzeichnet, daß sie einen ersten und einen zweiten Verteilungskoppler (14₁, 14₂) sowie eine erste und eine zweite Funksignalquelle (T1, T2) aufweist, wobei der erste Verteilungskoppler (14₁) einen ersten Eingang (A1) aufweist, der ein von der ersten Funksignalquelle (T1) geliefertes erstes Funksignal empfängt, einen mit einem ersten Eingang (A3) des ersten Polarisationskopplers (14₃) verbundenen ersten Ausgang (C1), und einen mit einem ersten Eingang (A4; B4) des zweiten Polarisationskopplers (14₄) verbundenen zweiten Ausgang (D1), und der zweite Verteilungskoppler (14₂) einen ersten Eingang (A2) aufweist, der ein von der zweiten Funksignalquelle (T2) geliefertes zweites Funksignal empfängt, einen mit einem zweiten Eingang (B3) des ersten Polarisationskopplers (14₃) verbundenen ersten Ausgang (C2), und einen mit einem zweiten Eingang (B4; A4) des zweiten Polarisationskopplers (14₄) verbundenen zweiten Ausgang (D2).

8. Funkstation gemäß Anspruch 7, dadurch gekennzeichnet, daß die Hybridkoppler (14₁-14₄) untereinander und mit den Antennen (10, 12) derart verbunden sind, daß jedes von dem ersten und zweiten Funksignal von den beiden Antennen in Form von zwei Funkwellen mit gleichsinniger Zirkularpolarisation abgegeben wird.

9. Funkstation gemäß Anspruch 8, dadurch gekennzeichnet, daß der Abstand (d) zwischen den beiden Antennen (10, 12) und die Längen (L,L+ΔL) der Koaxialkabel, welche den ersten Ausgang (C1) des ersten Verteilungskopplers (14₁) mit dem ersten Eingang (A3) des ersten Polarisationskopplers (14₃), den zweiten Ausgang (D1) des ersten Verteilungskopplers (14₁) mit dem ersten Eingang (A4) des zweiten Polarisationskopplers (14₄), den ersten Ausgang (C2) des zweiten Verteilungskopplers (14₂) mit dem zweiten Eingang (B3) des ersten Polarisationskopplers (14₃), bzw. den zweiten Ausgang (D2) des zweiten Verteilungskopplers (14₂) mit dem zweiten Eingang (B4) des zweiten Polarisationskopplers (14₄) verbinden, derart gewählt sind, daß ein Gewinn an Richtwirkung für jedes von dem ersten und zweiten Funksignal erhalten wird.

10. Funkstation gemäß Anspruch 9, dadurch gekennzeichnet, daß der Abstand (d) zwischen den beiden Antennen (10, 12) in der Größenordnung von 0,92·λ beträgt, wobei λ die Wellenlänge der Funkwellen in Luft bezeichnet, und daß der Längenunterschied (ΔL) zwischen dem Koaxialkabel, welches den zweiten Ausgang (D1) des ersten Verteilungskopplers (14₁) mit dem ersten Eingang (A4) des zweiten Polarisationskopplers (14₄) verbindet, und dem Koaxialkabel, welches den ersten Ausgang (C1) des ersten Verteilungskopplers (14₁) mit dem ersten Eingang (A3) des ersten Polarisationskopplers (14₃) verbindet, die Form (n-Δφ/2π)λ" besitzt, wobei n eine ganze Zahl ist, λ" die Wellenlänge der Funksignale in den Koaxialkabeln ist, und Δφ die Phasendifferenz zwischen dem am zweiten Ausgang (D1) des ersten Verteilungskopplers vorhandenen Abschnitt des ersten Funksignals und dem am ersten Ausgang (C1) des ersten Verteilungskopplers vorhandenen Abschnitt des ersten Funksignals ist, und daß der Längenunterschied (ΔL') zwischen dem Koaxialkabel, welches den ersten Ausgang (C2) des zweiten Verteilungskopplers (14₂) mit dem zweiten Eingang (B3) des ersten Polarisationskopplers (14₃) verbindet, und dem Koaxialkabel, welches den zweiten Ausgang (D2) des zweiten Verteilungskopplers (14₂) mit dem zweiten Eingang (B4) des zweiten Polarisationskopplers (14₄) verbindet, die Form (n'-Δφ'/2π)λ" besitzt, wobei n' eine ganze Zahl ist und Δφ' die Phasendifferenz zwischen dem am ersten Ausgang (C2) des zweiten Verteilungskopplers vorhandenen Abschnitt des zweiten Funksignals und dem am zweiten Ausgang (D2) des zweiten Verteilungskopplers vorhandenen Abschnitt des zweiten Funksignals ist.

11. Funkstation gemäß Anspruch 7, dadurch gekennzeichnet, daß die Hybridkoppler (14₁-14₄) untereinander und mit den Antennen (10, 12) derart verbunden sind, daß jedes von dem ersten und zweiten Funksignal von den beiden Antennen in Form von zwei Funkwellen mit gegensinniger Zirkularpolarisation abgegeben wird.

12. Funkstation gemäß einem der Ansprüche 7 bis 11, dadurch gekennzeichnet, daß mindestens einer von dem ersten und zweiten Verteilungskoppler (14₁, 14₂) einen zweiten Eingang (B1, B2) aufweist, der mit einer weiteren Funksignalquelle (T3, T4) verbunden ist.

13. Funkstation gemäß einem der Ansprüche 1 bis 12, dadurch gekennzeichnet, daß sie mindestens einen Empfänger (R1) aufweist, der eine Diversity-Verarbeitung von zwei Eingangsfunksignalen durchführt, wobei eines der Eingangsfunksignale ausgehend von einer elektrischen Feldkomponente erhalten wird, die von einer der beiden Antennen (10) in einer ersten Richtung aufgefangen wird, und das andere Eingangsfunksignal ausgehend von einer elektrischen Feldkomponente erhalten wird, die von der anderen Antenne (12) in einer zweiten Richtung aufgefangen wird, welche orthagonal zu der ersten Richtung ist.

14. Funkstation gemäß Anspruch 13, dadurch gekennzeichnet, daß sie mindestens zwei Empfänger (R1, R3) aufweist, von denen jeder eine Diversity-Verarbeitung von zwei jeweiligen Eingangsfunksignalen durchführt, wobei ein erster Teilungskoppler (14₅) einen Eingang (A5) aufweist, der ein Funksignal empfängt, das ausgehend von einer elektrischen Feldkomponente erhalten wird, welche von einer Antenne (12) in der ersten Richtung aufgefangen wird, und zwei Ausgänge (C5, D5), von denen jeder ein Eingangsfunksignal an einen jeweiligen Empfänger (R1, R3) liefert, und einen zweiten Teilungshybridkoppler (14₆) mit einem Eingang (A6), der ein Funksignal empfängt, das ausgehend von einer elektrischen Feldkomponente erhalten wird, welche von der anderen Antenne (10) in der zweiten Richtung aufgefangen wird, und zwei Ausgänge (C6, D6), die jeder das andere Eingangsfunksignal an einen jeweiligen Empfänger (R1, R3) liefern.

## Claims

1. A radio station, characterised in that it includes two antennas (10, 12) respectively associated with first and second hybrid transmission polarisation couplers (14₃, 14₄), each antenna being arranged to generate two orthogonal electric field components in response to two respective quadrature radio signals from the corresponding polarisation coupler, and in that it further includes at least one hybrid distribution coupler (14₁) with a first output (C1) connected to a first input (A3) of the first polarisation coupler (14₃) and a second output (D1) connected to a first input (A4) of the second polarisation coupler (14₄), and at least one radio signal source (T1) delivering a radio signal to a first input (A1) of the distribution coupler (14₁).

2. A radio station in accordance with claim 1, characterised in that said hybrid couplers (14₁, 14₃, 14₄) are connected to each other and to the antennas (10, 12) in such a way that the radio signal delivered to said first input (A1) of the distribution coupler (14₁) is transmitted by the two antennas in the form of two respective radio waves circularly polarised in the same direction.

3. A radio station in accordance with claim 2, characterised in that the distance (d) between the two antennas (10, 12) and the lengths (L, L+ΔL) of the coaxial cables connecting respectively the first output (C1) of the distribution coupler (14₁) to the first input (A3) of the first polarisation coupler (14₃) and the second output (D1) of the distribution coupler (14₁) to the first input (A4) of the second polarisation coupler (14₄) are selected so as to obtain a gain in directivity for the radio signal delivered to said first input (A1) of the distribution coupler (14₁).

4. A radio station in accordance with claim 3, characterised in that the distance (d) between the two antennas (10, 12) is about 0.92 λ, where λ denotes the wave length in the air of radio waves, and in that the difference in length (ΔL) between the coaxial cable connecting the second output (D1) of the distribution coupler (14₁) to the first input (A4) of the second polarisation coupler (14₄) and the coaxial cable connecting the first output (C1) of the distribution coupler (14₁) to the first input (A3) of the first polarisation coupler (14₃) is of the form (n-ΔΦ/2π)λ" where n is an integer, λ" is the wave length of the radio signals in the coaxial cables, and ΔΦ is the phase difference between the radio signal portion delivered to said first input (A1) of the distribution coupler (14₁) present at the second output (D1) of the distribution coupler and the portion of the same radio signal present at the first output (C1) of the distribution coupler.

5. A radio station in accordance with claim 1, characterised in that said hybrid couplers (14₁, 14₃, 14₄), are connected to each other and to the antennas (10, 12) in such a way that the radio signal delivered to said first input (A1) of the distribution coupler (14₁) is transmitted by the two antennas in the form of two respective radio waves circularly polarised in opposite directions.

6. A radio station in accordance with any one of claims 1 to 5, characterised in that it includes another radio signal source (T3) delivering another radio signal to a second input (B1) of said distribution coupler (14₁).

7. A radio station in accordance with any one of claims 1 to 6, characterised in that it includes first and second distribution couplers (14₁, 14₂) and first and second radio signal sources (T1, T2), the first distribution coupler (14₁) having a first input (A1) receiving a first radio signal from the first radio signal source (T1), a first output (C1) connected to a first input (A3) of the first polarisation coupler (14₃) and a second output (D1) connected to a first input (A4 ; B4) of the second polarisation coupler (14₄), and the second distribution coupler (14₂) having a first input (A2) receiving a second radio signal from the second radio signal source (T2), a first output (C2) connected to a second input (B3) of the first polarisation coupler (14₃) and a second output (D2) connected to a second input (B4 ; A4) of the second polarisation coupler (14₄).

8. A radio station in accordance with claim 7, characterised in that said hybrid couplers (14₁ - 14₄) are connected to each other and to the antennas (10, 12) in such a way that each of said first and second radio signals is transmitted by the two antennas in the form of two respective radio waves circularly polarised in the same direction.

9. A radio station in accordance with claim 8, characterised in that the distance (d) between the two antennas (10, 12) and the lengths (L, L+ΔL) of the coaxial cables connecting respectively the first output (C1) of the first distribution coupler (14₁) to the first input (A3) of the first polarisation coupler (14₃), the second output (D1) of the first distribution coupler (14₁) to the first input (A4) of the second polarisation coupler (14₄), the first output (C2) of the second distribution coupler (14₂) to the second input (B3) of the first polarisation coupler (14₃), and the second output (D2) of the second distribution coupler (14₂) to the second input (B4) of the second polarisation coupler (14₄) are selected so as to obtain a gain in directivity for each of said first and second radio signals.

10. A radio station in accordance with claim 9, characterised in that the distance (d) between the two antennas (10, 12) is about 0.92 λ, where λ denotes the wave length in the air of radio waves, and in that the difference in length (ΔL) between the coaxial cable connecting the second output (D1) of the first distribution coupler (14₁) to the first input (A4) of the second polarisation coupler (14₄) and the coaxial cable connecting the first output (C1) of the first distribution coupler (14₁) to the first input (A3) of the first polarisation coupler (14₃) is of the form (n-ΔΦ/2π)λ" where n is an integer, λ" is the wave length of the radio signals in the coaxial cables, and ΔΦ is the phase difference between the portion of the first radio signal present at the second output (D1) of the first distribution coupler and the portion of the first radio signal present at the first output (C1) of the first distribution coupler, and in that the difference in length (ΔL') between the coaxial cable connecting the first output (C2) of the second distribution coupler (14₂) to the second input (B3) of the first polarisation coupler (14₃) and the coaxial cable connecting the second output (D2) of the second distribution coupler (14₂) to the second input (B4) of the second polarisation coupler (14₄) is of the form (n'-ΔΦ'/2π)λ", where n' is an integer, and ΔΦ' is the phase difference between the portion of the second radio signal present at the first output (C2) of the second distribution coupler and the portion of the second radio signal present at the second output (D2) of the second distribution coupler.

11. A radio station in accordance with claim 7, characterised in that said hybrid couplers (14₁ - 14₄) are connected to each other and to the antennas (10, 12) in such a way that each of said first and second radio signals is transmitted by the two antennas in the form of two respective radio waves circularly polarised in opposite directions.

12. A radio station in accordance with any one of claims 7 to 11, characterised in that one at least of the first and second distribution couplers (14₁, 14₂) has a second input (B1, B2) connected to another radio signal source (T3, T4).

13. A radio station in accordance with any one of claims 1 to 12, characterised in that it includes at least one receiver (R1) ensuring a diversity treatment of two input radio signals, one of said input radio signals being obtained from an electric field component picked up by one of the two antennas (10) in accordance with a first direction, and the other input radio signal being obtained from an electric field component picked up by the other antenna (12) in accordance with a second direction orthogonal to said first direction.

14. A radio station in accordance with claim 13, characterised in that it includes at least two receivers (R1, R3) each ensuring a diversity treatment of two respective input radio signals, a first division coupler (14₅) with an input (A5) receiving a radio signal obtained from an electric field component picked up by an antenna (12) in accordance with the first direction and two outputs (C5, D5) each delivering an input radio signal to a respective receiver (R1, R3), and a second hybrid division coupler (14₆) with an input (A6) receiving a radio signal obtained from an electric field component picked up by the other antenna (10) in accordance with the second direction and two outputs (C6, D6) each delivering the other input radio signal to a respective receiver (R1, R3).
